# FASCICULE DE BREVET EUROPEEN

(11) **EP 3 077 838 B1**
(45) Date de publication et mention de la délivrance du brevet: **24.07.2019**
(21) Numéro de dépôt: 14828054.8
(22) Date de dépôt: 03.12.2014
(51) Int. Cl.: G01S 1/70, G01S 5/16

(54) **SYSTEME ET PROCEDE DE GEO-LOCALISATION LIFI**
LI-FI-GEOPOSITIONIERUNGSSYSTEM UND VERFAHREN
LI-FI GEOPOSITIONING SYSTEM AND METHOD

(30) Priorité: 06.12.2013 FR 1362261
(43) Date de publication de la demande: 12.10.2016
(73) Titulaire: SNCF Mobilités, 93200 Saint-Denis (FR); Oledcomm, 78140 Velizy Villacoublay (FR)
(72) Inventeur: GHANNOUM, Hassan, 92400 Courbevoie (FR); TOPSU, Suat, 78000 Versailles (FR); MAYER, Cédric, 77176 Savigny-le-Temple (FR); PEREZ, Huetzin, 78000 Versailles (FR)
(74) Mandataire: Argyma
(86) Numéro de dépôt international: PCT/IB2014/066552
(87) Numéro de publication internationale: WO 2015/083097

(56) Documents cités:
- EP-A2- 0 672 918
- US-A- 5 079 640
- US-A1- 2009 171 571
- US-A1- 2010 182 201
- US-A1- 2011 153 201
- US-B1- 8 248 467
- KRISHNA PRASAD PUJAPANDA: "LiFi Integrated to Power-lines for Smart Illumination Cum Communication", COMMUNICATION SYSTEMS AND NETWORK TECHNOLOGIES (CSNT), 2013 INTERNATIONAL CONFERENCE ON, IEEE, 6 avril 2013 (2013-04-06), pages 875-878, XP032421223, DOI: 10.1109/CSNT.2013.189 ISBN: 978-1-4673-5603-9
- SHINICHIRO HARUYAMA: "Visible light communication using sustainable LED lights", ITU KALEIDOSCOPE: BUILDING SUSTAINABLE COMMUNITIES (K-2013), 2013 PROCEEDINGS OF, IEEE, 22 avril 2013 (2013-04-22), pages 1-6, XP032427813, ISBN: 978-1-4673-4676-4

## Description

### DOMAINE TECHNIQUE GENERAL ET ART ANTERIEUR

La présente invention concerne le domaine de la géo-localisation et, plus particulièrement, la géo-localisation dans une gare ferroviaire.

La géo-localisation en espace ouvert a connu un succès important du fait de la popularisation des dispositifs de géo-localisation GPS utilisés, en particulier, pour la navigation automobile. La technologie GPS ne permet néanmoins pas d'être géo-localisé dans un espace fermé dans lequel une communication avec un satellite est difficile à assurer.

Pour permettre la géo-localisation dans des espaces fermés, en particulier, les aéroports, les musées et les centres commerciaux, il a été proposé différents systèmes de géo-localisation se basant sur la technologie WiFi (IEEE 802.11). Néanmoins, compte-tenu de son faible degré de précision et de la volonté de limiter l'exposition des personnes aux ondes radioélectriques, celle solution n'est que rarement mise en oeuvre.

Aussi, afin de résoudre ces inconvénients, il a été proposé des systèmes de géo-localisation se basant sur la technologie LiFi (IEEE 802.15). Pour rappel, la technologie Li-Fi est un moyen de communication basé sur l'utilisation de la lumière issue des éclairages à Leds pour transmettre des données de manière non filaire.

En pratique, chaque Led d'émission LiFi est adaptée pour émettre une séquence de signaux lumineux formant un signal de localisation prédéterminé. De manière connue, un module de réception LiFi est adapté pour recevoir ladite séquence de signaux lumineux et en déduire ledit signal de localisation émis par ladite Led d'émission.

On connaît dans l'art antérieur une utilisation d'un système de géo-localisation LiFi dans un musée afin de générer des interactions avec les audio-guides utilisés par les visiteurs dudit musée.

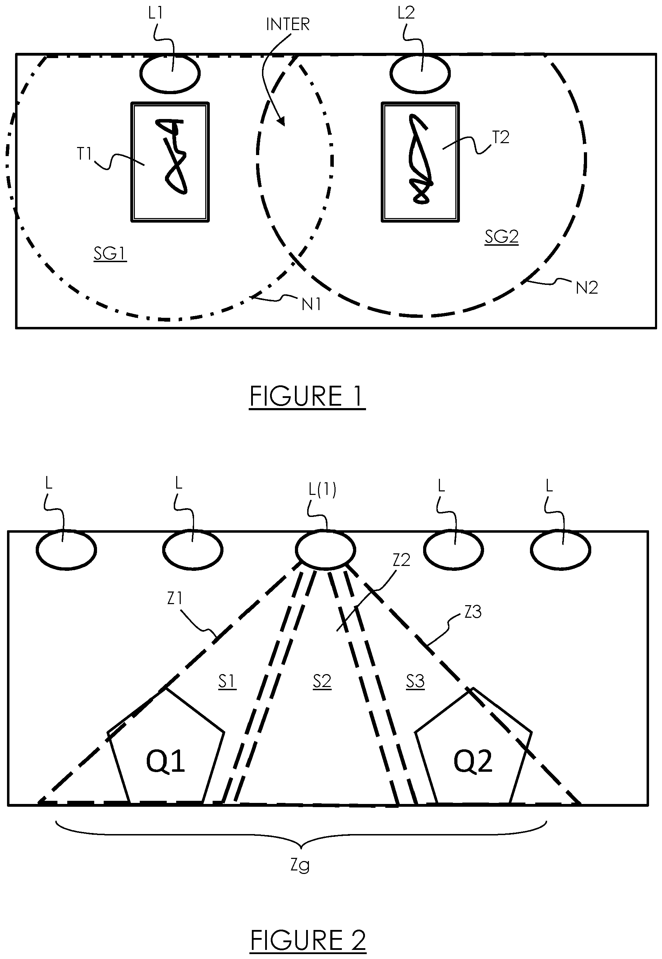

En référence à la figure 1, on connaît dans l'art antérieur un système de géo-localisation LiFi comportant une pluralité de Leds d'émission LiFi L1, L2 qui sont respectivement associées à une pluralité de tableaux T1, T2 situés dans un musée. La Led d'émission LiFi L1 est adaptée pour émettre un signal de localisation SG1 dans une zone de géo-localisation N1 dans laquelle est situé le premier tableau T1. De manière similaire, la Led d'émission LiFi L2 est adaptée pour émettre un signal de localisation SG2 dans une zone de géo-localisation N2 dans laquelle est situé le deuxième tableau T2.

Les visiteurs du musée sont équipés d'un audio-guide comportant un module de réception Lifi qui est configuré pour recevoir un des signaux de localisation SG1, SG2 lorsqu'il est situé dans une des zone de géo-localisation N1, N2.

A titre d'exemple, lorsqu'un visiteur regarde le premier tableau T1 dans la zone de géo-localisation N1, son audio-guide reçoit une séquence d'impulsions lumineuses de la Led d'émission LiFi L1 qui correspond au premier signal de localisation SG1. Suite à la réception du premier signal de localisation SG1, l'audio-guide émet un premier message audio présentant ledit premier tableau T1. Autrement dit, un visiteur du musée bénéficie d'un message audio qui dépend de sa localisation dans le musée, la sélection du message audio étant automatique.

Néanmoins, un tel système de communication LiFi présente plusieurs inconvénients. En effet, il est nécessaire de prévoir une Led d'émission LiFi pour chaque tableau, ce qui augmente le coût d'achat et de maintenance du système.

En outre, lorsque les Leds d'émission sont proches les unes des autres, les zones de géo-localisation N1, N2 peuvent présenter une zone d'interférence INTER comme illustré à la figure 1. Dans cette zone d'interférence INTER, l'audio-guide peut recevoir de manière simultanée plusieurs signaux de localisation différents SG1, SG2, ce qui perturbe la sélection du message audio à diffuser au visiteur.

Il existe un besoin pour un système de géo-localisation utilisant une communication LiFi qui soit précis et dont le coût soit réduit.

De manière incidente, on connaît par les documents US2009/0171571A1 et US8248467B1 des systèmes de positionnement par des signaux lumineux qui définissent des zones superposées pour permettre une localisation. Dans des domaines plus éloignés, on connaît par les documents US5079640 et US2010/0182201 A1 des systèmes de localisation par infrarouge pour localiser un outil de forage ou des équipements de location.

### PRESENTATION GENERALE DE L'INVENTION

A cet effet, l'invention concerne un système de géo-localisation selon la revendication 1.

Grâce au système de géo-localisation selon l'invention, un unique module d'émission peut définir une pluralité de zones de localisation distinctes, ce qui évite de recourir à une pluralité de modules qui doivent être connectés électriquement de manière indépendante.

En outre, comme les zones de localisation sont définies au sein d'un même module d'émission, il est aisé de s'assurer que lesdites zones de localisation sont distinctes avant l'installation dudit module d'émission. Contrairement à l'art antérieur dans lequel des zones d'interférence pouvaient apparaître, le module d'émission selon l'invention permet de garantir que les zones de localisation sont distinctes.

De manière avantageuse, comme le risque d'interférence est annulé, on peut définir des zones de localisation nombreuses et dont la taille est réduite afin de permettre une localisation précise.

De manière préférée, le module d'émission comporte au moins une première unité d'émission et une deuxième unité d'émission pour émettre respectivement le premier signal de localisation selon la première direction et le deuxième signal de localisation selon la deuxième direction. Chaque signal de localisation est généré par une unique unité d'émission, ce qui simplifie l'architecture d'un module d'émission et permet de régler de manière précise leurs orientations pour former des zones de localisation distinctes. De manière avantageuse, le nombre d'unités d'émission d'un module d'émission peut être paramétré en fonction du nombre de zones de localisation à définir. Selon une forme de réalisation préférée, chaque unité d'émission comporte une ou plusieurs Leds.

Selon l'invention, le système de géo-localisation comporte au moins un module de réception adapté pour recevoir une séquence d'impulsions lumineuses selon la technologie LiFi de manière à interpréter un signal de localisation émis par un module d'émission. Ainsi, un tel module de réception permet à un utilisateur de connaître de manière précise, rapide et fiable la zone de localisation dans laquelle il est situé.

De manière préférée, le module d'émission se présente sous la forme d'un luminaire d'éclairage. Autrement dit, le module remplit une première fonction d'éclairage et une deuxième fonction de localisation, ce qui est avantageux. En outre, il suffit de remplacer un luminaire ordinaire d'un bâtiment par un luminaire comportant un module d'émission pour permettre une géo-localisation fiable dans ledit bâtiment. De manière préférée, le module d'émission est fixé à une paroi d'un bâtiment, par exemple un plafond ou une paroi verticale.

De manière préférée, le module d'émission est adapté pour définir deux zones de localisation distinctes juxtaposées. Autrement dit, les zones de localisation sont situées les unes à côté des autres de manière à assurer une continuité dans la localisation.

Selon un aspect préféré, au moins deux zones de localisation distinctes sont étagées verticalement ce qui est avantageux dans un bâtiment étagé, un étage dudit bâtiment correspondant à une zone de localisation.

De préférence, au moins deux zones de localisation distinctes appartiennent à un même plan horizontal afin de définir, par exemple, différentes zones d'embarquement distinctes dans une même salle d'embarquement.

L'invention concerne en outre un procédé de géo-localisation au moyen d'au moins un module d'émission adapté pour émettre au moins un signal de localisation sous la forme d'une séquence d'impulsions lumineuses selon la technologie LiFi, procédé dans lequel :
- le module d'émission émet un premier signal de localisation selon une première direction pour définir une première zone de localisation, et
- le module d'émission émet un deuxième signal de localisation selon une deuxième direction pour définir une deuxième zone de localisation distincte de la première zone de localisation.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique d'un système de géo-localisation selon l'art antérieur dans un musée (déjà présentée) ;
- la figure 2 est une représentation schématique d'un bâtiment équipé d'une première forme de réalisation d'un système de géo-localisation selon l'invention ;
- la figure 3 est une représentation schématique d'un module d'émission du système de géo-localisation ;
- figure 4 est une représentation schématique dans un plan en coupe horizontale d'une deuxième forme de réalisation d'un module d'émission selon l'invention ; et
- la figure 5 est une représentation schématique dans un plan en coupe verticale d'une troisième forme de réalisation d'un module d'émission selon l'invention.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

L'invention va être présentée pour une application à une gare ferroviaire comprenant une pluralité de quais d'embarquement Q1, Q2 comme représenté à la figure 2. De manière ordinaire, la gare ferroviaire comporte une pluralité de luminaires L afin de permettre aux voyageurs de pouvoir se déplacer sans encombre jusqu'à leurs quais d'embarquement Q1, Q2.

Dans cet exemple, la gare ferroviaire comprend un système de géo-localisation qui comporte une pluralité de modules d'émission 1 adaptés pour émettre des signaux de localisation sous la forme d'une séquence d'impulsions lumineuses selon la technologie LiFi. Par souci de clarté, un unique module d'émission 1 est représenté à la figure 2.

En référence à la figure 2, le module d'émission 1 se présente sous la forme d'un luminaire d'éclairage L et est installé en lieu et place d'un luminaire ordinaire. De manière préférée, tous les luminaires L présentent le même aspect extérieur, indépendamment du fait qu'il comporte ou non un module d'émission 1.

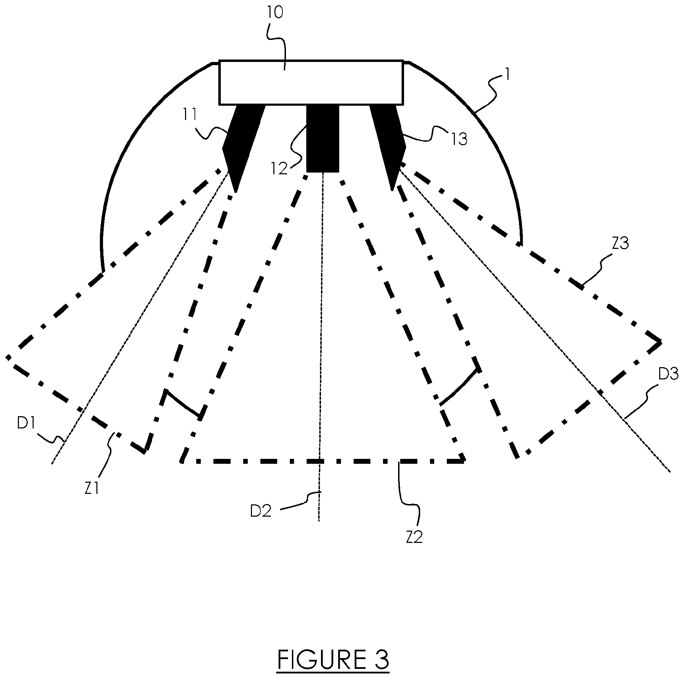

En référence aux figures 2 et 3, le module d'émission 1 est adapté pour émettre respectivement un premier signal de localisation S1, un deuxième signal de localisation S2 et un troisième signal de localisation S3 sous la forme d'une séquence d'impulsions lumineuses selon la technologie LiFi selon une première direction D1, une deuxième direction D2 et une troisième direction D3 différentes les unes des autres de manière à définir trois zones de localisation distinctes Z1, Z2, Z3. Autrement dit, chaque zone de localisation Z1, Z2, Z3 est éclairée par une séquence d'impulsions lumineuses caractéristique S1, S2, S3.

En référence à la figure 2, le module d'émission 1 est configuré pour que les zones de localisation distinctes Z1, Z3 correspondent respectivement à l'accès au premier quai Q1 et à l'accès au deuxième quai Q2. Le module d'émission 1 est configuré pour que la deuxième zone de localisation Z2 soit située entre les autres zones de localisation Z1, Z3, c'est-à-dire, entre les accès aux quais Q1, Q2.

Un exemple de réalisation d'un module d'émission 1 adapté pour définir trois zones de localisation Z1, Z2, Z3 est illustré de manière schématique à la figure 3. Le module d'émission 1 comporte un support 10 sur lequel sont montées trois unités d'émission 11, 12, 13. Dans cet exemple, le support 10 est fixé solidairement à un plafond de la gare ferroviaire.

En référence à la figure 3, les unités d'émission 11, 12, 13 émettent respectivement un premier signal de localisation S1 selon une première direction D1 pour définir une première zone de localisation Z1, un deuxième signal de localisation S2 selon une deuxième direction D2 pour définir une deuxième zone de localisation Z2 et un troisième signal de localisation S3 selon une troisième direction D3 pour définir une troisième zone de localisation Z3.

Dans cet exemple, en référence à la figure 2, les zones de localisation Z1, Z2, Z3 sont juxtaposées les unes aux autres afin de former une zone de surveillance globale Zg quasi-continue. De plus, les zones de localisation Z1, Z2, Z3 sont distinctes les unes des autres afin d'éviter toute interférence pouvant conduire à un défaut de localisation. Un tel positionnement des zones de localisation Z1, Z2, Z3 est rendu possible par le fait que les unités d'émission 11, 12, 13 sont montées sur un même support 10 et appartiennent à un même module d'émission 1. Ainsi, il est possible de définir de manière précise les zones de localisation Z1, Z2, Z3 préalablement au montage du support 10 au plafond de la gare ferroviaire.

Dans cet exemple, en référence à la figure 3, chaque unité d'émission 11, 12, 13 comporte une unique Led pour émettre un unique signal de localisation S1, S2, S3 dans la zone de localisation Z1, Z2, Z3 visée par ladite unité d'émission 11, 12, 13. Il va de soi qu'une unité d'émission 11, 12, 13 pourrait comporter plusieurs Leds afin d'augmenter l'éclairage fourni par le module d'émission 1 remplissant également une fonction de luminaire.

Dans cet exemple de réalisation, en référence à la figure 3, la deuxième direction d'émission D2 s'étend verticalement, les directions d'émission D1, D3 étant inclinées d'un angle de 45° par rapport à la direction verticale D2 afin d'éviter la formation d'une zone d'interférence.

De manière préférée, chaque unité d'émission 11, 12, 13 comporte un réflecteur adapté pour orienter l'éclairage de la Led de son unité d'émission 11, 12, 13 selon la direction choisie D1, D2, D3. Autrement dit, chaque réflecteur permet de définir de manière précise la zone de localisation Z1, Z2, Z3 visée par l'unité d'émission 11, 12, 13 afin d'éviter la formation d'une zone d'interférence. De préférence, chaque réflecteur se présente sous la forme d'une vitre réflective placée devant une Led d'une unité d'émission 11, 12, 13.

Dans cet exemple, l'émission des signaux de signalisation S1, S2, S3 est permanente. Néanmoins, il va de soi qu'une émission périodique et/ou alternée pourrait être mise en oeuvre.

Le module d'émission 1 appartient à un système de géo-localisation comportant plusieurs modules d'émission répartis dans la gare ferroviaire. Chaque module d'émission 1 définit une zone de surveillance globale Zg composée d'une pluralité de zones de localisation distinctes et juxtaposées. Grâce à la pluralité de modules d'émission 1, une pluralité de zones de surveillance globale éloignées les unes des autres sont définies dans la gare ferroviaire.

De manière préférée, le système de géo-localisation comporte en outre une pluralité de modules de réception (non représentés) adaptés pour recevoir chacun une séquence d'impulsions lumineuses selon la technologie LiFi. Chaque module de réception est apte à interpréter un signal de localisation S1, S2, S3 émis par un module d'émission 1 lorsque le module de réception est situé dans une des zones de localisation Z1, Z2, Z3 définies par ledit module d'émission 1. Le module de réception comporte par exemple une cellule photo réceptrice. Un tel module de réception est connu de l'homme du métier et ne sera pas présenté plus en détails.

De manière préférée, le module de réception est intégré à un dispositif électronique personnel d'un voyageur (téléphone intelligent, tablette informatique, etc.) afin de permettre au voyageur de connaître sa position précise dans la gare ferroviaire suite à la réception d'un signal de localisation S1, S2, S3.

Un exemple de mise en oeuvre de l'invention va être maintenant présenté pour un voyageur d'une gare ferroviaire qui est équipé d'un téléphone intelligent sur lequel est affichée une carte de la gare ferroviaire. Comme présenté précédemment, le téléphone intelligent comporte un module de réception LiFi.

Le voyageur consulte la carte de la gare ferroviaire sur son téléphone intelligent et identifie le numéro du quai auquel il doit se rendre pour prendre son train. Malheureusement, le voyageur ne sait pas se localiser sur la carte ferroviaire affichée sur son téléphone intelligent. Dans cet exemple, en référence à la figure 2, le voyageur est situé au niveau de l'accès du deuxième quai Q2 et doit se rendre au premier quai Q1.

Pour permettre sa localisation, le voyageur active le module de réception LiFi de son téléphone intelligent et reçoit un signal de localisation S3 étant donné qu'il est situé dans la zone de localisation Z3 définie devant l'accès du deuxième quai Q2 de la gare ferroviaire.

Le téléphone intelligent du voyageur interprète le signal de localisation S3 et le traduit en un marqueur de position sur la carte de la gare ferroviaire affichée sur son téléphone intelligent afin de représenter sa position actuelle. Grâce au système de géo-localisation, le voyageur se situe de manière précise et rapide dans la gare ferroviaire et peut ainsi mieux estimer la distance qui le sépare du premier quai Q1.

Pour se rendre au premier quai Q1, le voyageur va passer de la troisième zone de localisation Z3 à la deuxième zone de localisation Z2 et recevoir le deuxième signal de localisation S2, ce qui va modifier l'affichage de son marqueur de position sur sa carte et ainsi faciliter son orientation jusqu'au premier quai Q1.

Le système de géo-localisation est ainsi performant pour permettre au voyageur de se situer de manière précise dans la gare ferroviaire.

De manière avantageuse, le système de géo-localisation est discret et n'engendre aucune pollution visuelle étant donné que chaque module d'émission 1 est intégré dans un luminaire de la gare ferroviaire.

Enfin, le coût du système de géo-localisation est faible par comparaison à l'art antérieur étant donné que l'on peut définir une pluralité de zones de localisation avec un unique module d'émission.

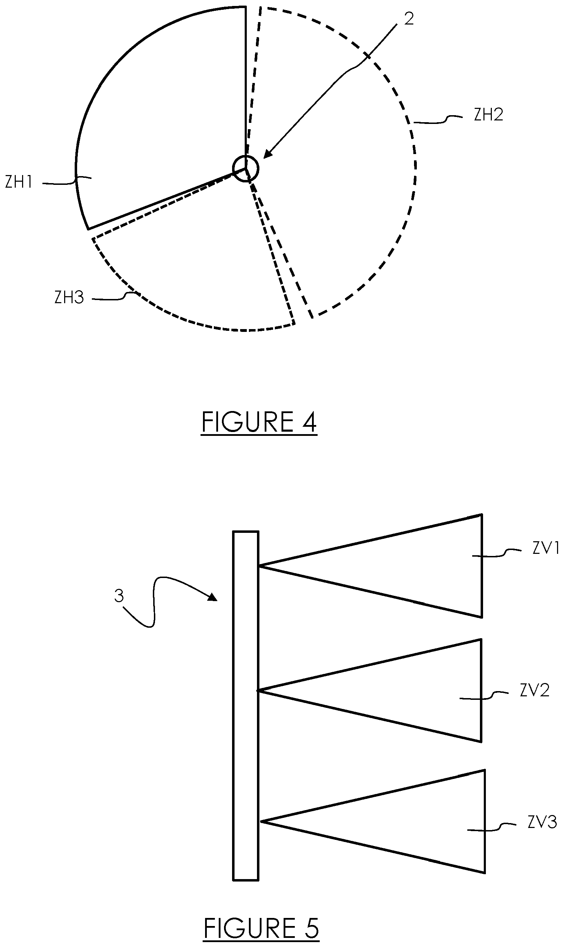

Selon une forme de réalisation de l'invention, en référence à la figure 4 représentant un module d'émission 2 dans un plan en coupe horizontale, le module d'émission 2 est configuré pour définir plusieurs secteurs de localisation ZH1, ZH2, ZH3 dans un plan horizontal. Autrement dit, chaque zone de localisation horizontale ZH1, ZH2, ZH3 se présente sous la forme d'un secteur angulaire comme illustré à la figure 4. De préférence, le module d'émission 2 se présente sous la forme d'une colonne verticale d'éclairage qui est fixée au centre d'une salle. Un tel module d'émission 2 est particulièrement avantageux pour définir une pluralité de salles d'attente situées dans un même plan horizontal.

Selon une autre forme de réalisation de l'invention, en référence à la figure 5 représentant un module d'émission 3 dans un plan en coupe verticale, le module d'émission 3 est configuré pour définir plusieurs niveaux de localisation ZV1, ZV2, ZV3 dans un plan vertical. De préférence, le module d'émission 3 se présente sous la forme d'une colonne verticale d'éclairage qui s'étend sur plusieurs étages d'un bâtiment étagé, par exemple, à proximité d'escalators ou d'escaliers. Un tel module d'émission 3 est particulièrement avantageux pour définir une pluralité de volumes étagés verticalement. Ainsi, un même module d'émission 3 permet de définir les différents étages d'un centre commercial.

Il va de soi qu'un même module d'émission pourrait définir des zones de localisation étagées verticalement et réparties horizontalement. De même, il va de soi que les zones de localisation peuvent être de tailles identiques ou différentes.

Il a été présenté un module d'émission fixé solidairement à un plafond d'un bâtiment mais il va de soi qu'il pourrait être monté à toute paroi, verticale ou horizontale, ou être suspendu dans ledit bâtiment.

Il a été présenté un module d'émission adapté pour définir deux ou trois zones de localisation mais il va de soi qu'un même module d'émission pourrait définir plus de trois zones de localisation.

L'invention a été présentée pour une application dans un espace fermé mais il va de soi qu'elle s'applique à tout espace (ouvert, fermé) dans lequel une communication LiFi est possible, en particulier, un véhicule ferroviaire ou un centre de maintenance.

## Revendications

1. Système de géo-localisation comportant au moins un module d'émission (1), se présentant sous la forme d'un luminaire d'éclairage (L) fixé à une paroi d'un bâtiment, comportant au moins une première unité d'émission (11) et une deuxième unité d'émission (12), montées sur un même support, pour émettre respectivement un premier signal de localisation (S1) et un deuxième signal de localisation (S2), sous la forme d'une séquence d'impulsions lumineuses selon la technologie LiFi IEEE 802.15, selon une première direction (D1) et une deuxième direction (D2) différentes l'une de l'autre de manière à définir deux zones de localisation distinctes (Z1, Z2) juxtaposées, le système comportant au moins un module de réception adapté pour recevoir une séquence d'impulsions lumineuses selon la technologie LiFi de manière à interpréter un signal de localisation (S1, S2) émis par un module d'émission (1).

2. Système de géo-localisation selon la revendication 1, dans lequel chaque unité d'émission (11, 12) comporte une ou plusieurs Leds.

3. Système de géo-localisation selon l'une des revendications 1 à 2, dans lequel au moins deux zones de localisation distinctes (ZV1, ZV2) sont étagées verticalement.

4. Système de géo-localisation selon l'une des revendications 1 à 3, dans lequel au moins deux zones de localisation distinctes (ZH1, ZH2) appartiennent à un même plan horizontal.

5. Procédé de géo-localisation au moyen d'au moins un module d'émission (1), se présentant sous la forme d'un luminaire d'éclairage (L) fixé à une paroi d'un bâtiment, comportant au moins une première unité d'émission (11) et une deuxième unité d'émission (12), montées sur un même support, pour émettre respectivement un premier signal de localisation (S1) et un deuxième signal de localisation (S2)sous la forme d'une séquence d'impulsions lumineuses selon la technologie LiFi IEEE 802.15, procédé dans lequel :
- la première unité d'émission (11) émet un premier signal de localisation (S1) selon une première direction (D1) pour définir une première zone de localisation (Z1), et
- la deuxième unité d'émission (12) émet un deuxième signal de localisation (S2) selon une deuxième direction (D2) pour définir une deuxième zone de localisation (Z2) distincte et juxtaposée de la première zone de localisation (Z1)
- un module de réception reçoit une séquence d'impulsions lumineuses selon la technologie LiFi de manière à interpréter un signal de localisation (S1,S2) émis par une unité d'émission (11,12).

## Patentansprüche

1. Geopositionierungssystem, aufweisend mindestens ein Sendemodul (1) in Form eines Leuchtmittels (L), das an einer Wand eines Gebäudes befestigt ist, aufweisend mindestens eine erste Sendeeinheit (11) und eine zweite Sendeeinheit (12), die auf demselben Halter angebracht sind, um jeweils ein erstes Positionierungssignal (S1) und ein zweites Positionierungssignal (S2) in Form einer Sequenz von Lichtimpulsen gemäß der LiFi-Technologie IEEE 802.15 in eine erste Richtung (D1) und eine zweite Richtung (D2) zu senden, die sich derart voneinander unterscheiden, dass zwei unterschiedliche nebeneinanderliegende Positionierungszonen (Z1, Z2) festgelegt werden, wobei das System mindestens ein Empfangsmodul aufweist, das zum Empfang einer Sequenz von Lichtimpulsen gemäß der LiFi-Technologie geeignet ist, um ein von einem Sendemodul (1) gesendetes Positionierungssignal (S1, S2) zu interpretieren.

2. Geopositionierungssystem nach Anspruch 1, wobei jede Sendeeinheit (11, 12) eine oder mehrere LED(s) aufweist.

3. Geopositionierungssystem nach einem der Ansprüche 1 bis 2, wobei mindestens zwei unterschiedliche Positionierungszonen (ZV1, ZV2) vertikal stufig aufgebaut sind.

4. Geopositionierungssystem nach einem der Ansprüche 1 bis 3, wobei mindestens zwei unterschiedliche Positionierungszonen (ZH1, ZH2) zu derselben horizontalen Ebene gehören.

5. Geopositionierungsverfahren mittels mindestens eines Sendemoduls (1) in Form eines Leuchtmittels (L), das an einer Wand eines Gebäudes befestigt ist, aufweisend mindestens eine erste Sendeeinheit (11) und eine zweite Sendeeinheit (12), die auf demselben Halter angebracht sind, um jeweils ein erstes Positionierungssignal (S1) und ein zweites Positionierungssignal (S2) in Form einer Sequenz von Lichtimpulsen gemäß der LiFi-Technologie IEEE 802.15 zu senden, wobei bei dem Verfahren:
- die erste Sendeeinheit (11) ein erstes Positionierungssignal (S1) in eine erste Richtung (D1) sendet, um eine erste Positionierungszone (Z1) festzulegen, und
- die zweite Sendeeinheit (12) ein zweites Positionierungssignal (S2) in eine zweite Richtung (D2) sendet, um eine zweite Positionierungszone (Z2) festzulegen, die sich von der ersten Positionierungszone (Z1) unterscheidet und daneben liegt,
- ein Empfangsmodul eine Sequenz von Lichtimpulsen gemäß der LiFi-Technologie empfängt, um ein von einer Sendeeinheit (11, 12) gesendetes Positionierungssignal (S1, S2) zu interpretieren.

## Claims

1. A geo-location system including at least one emission module (1), having the form of a lighting luminaire (L) attached to a wall of a building, including at least a first emission unit (11) and a second emission unit (12), mounted on a same support, to emit a first location signal (S1) and a second location signal (S2) respectively, in the form of a sequence of light pulses according to the LiFi IEEE 802.15 technology, along a first direction (D1) and a second direction (D2) different from each other so as to define two juxtaposed distinct location zones (Z1, Z2), the system including at least one reception module adapted to receive a sequence of light pulses according to the LiFi technology so as to interpret a location signal (S1, S2) emitted by an emission module (1).

2. The geo-location system according to claim 1, wherein each emission unit (11, 12) includes one or more LEDs.

3. The geo-location system according to one of claims 1 and 2, wherein at least two distinct location zones (ZV1, ZV2) are vertically stepped.

4. The geo-location system according to one of claims 1 to 3, wherein at least two distinct location zones (ZH1, ZH2) belong to a same horizontal plane.

5. A geo-location method by means of at least one emission module (1), having the form of a lighting luminaire (L) attached to a wall of a building, including at least a first emission unit (11) and a second emission unit (12), mounted on a same support, to emit a first location signal (S1) and a second location signal (S2) respectively in the form of a sequence of light pulses according to the LiFi IEEE 802.15 technology, method in which:
- the first emission unit (11) emits a first location signal (S1) along a first direction (D1) to define a first location zone (Z1), and
- the second emission unit (12) emits a second location signal (S2) along a second direction (D2) to define a second location zone (Z2) distinct from and juxtaposed to the first location zone (Z1),
- a reception module receives a sequence of light pulses according to the LiFi technology so as to interpret a location signal (S1, S2) emitted by an emission unit (11, 12).
